(19) Europäisches Patentamt
European Patent Office
Office européen des brevets

(11) **EP 4 174 567 A1**

(12) **EUROPEAN PATENT APPLICATION**

(43) Date of publication:
**03.05.2023 Bulletin 2023/18**

(21) Application number: **21205875.4**

(22) Date of filing: **02.11.2021**

(51) International Patent Classification (IPC):
**G02F 1/35** (2006.01)     **G02F 1/365** (2006.01)

(52) Cooperative Patent Classification (CPC):
**G02F 1/365; G02F 1/3528**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ASML Netherlands B.V.
5500 AH Veldhoven (NL)**

(72) Inventors:
• **BAUERSCHMIDT, Sebastian, Thomas
5500 AH Veldhoven (NL)**
• **UEBEL, Patrick, Sebastian
5500 AH Veldhoven (NL)**
• **GÖTZ, Peter, Maximilian
5500 AH Veldhoven (NL)**

(74) Representative: **ASML Netherlands B.V.
Corporate Intellectual Property
P.O. Box 324
5500 AH Veldhoven (NL)**

(54) **HOLLOW-CORE PHOTONIC CRYSTAL FIBER BASED BROADBAND RADIATION GENERATOR**

(57)     Disclosed is a broadband radiation source device configured for generating broadband output radiation upon receiving substantially linearly polarized input radiation based on a modulation instability mechanism. The source comprises a hollow-core photonic crystal fiber and at least a first polarization element operable to impose a substantially circular or elliptical polarization on said input radiation prior to being received by said hollow-core photonic crystal fiber.

Fig. 11

EP 4 174 567 A1

**Description**

FIELD

The present invention relates to a hollow-core photonic crystal fiber based broadband radiation generator, and in particular such a broadband radiation generator in relation to metrology applications in the manufacture of integrated circuits.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-$k_1$ lithography may be used to process features with dimensions smaller than the classical resolution limit of a lithographic apparatus. In such process, the resolution formula may be expressed as CD = $k_1 \times \lambda$/NA, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry based tools for inspecting/measuring the exposed and/or etched product in process control. In each case, a radiation source is required. For various reasons, including measurement robustness and accuracy, broadband or white light radiation sources are increasingly used for such metrology applications. It would be desirable to improve on present devices for broadband radiation generation.

SUMMARY

In a first aspect of the invention there is provided a broadband radiation source device, being configured for generating broadband output radiation upon receiving substantially linearly polarized input radiation based on a modulation instability mechanism, comprising: a hollow-core photonic crystal fiber; and at least a first polarization element operable to impose a substantially circular or elliptical polarization on said input radiation prior to being received by said hollow-core photonic crystal fiber.

In a second aspect of the invention there is provided a method of generating broadband output radiation, the method comprising: exciting a working medium comprised within a hollow-core photonic crystal fiber with input radiation to generate said broadband output radiation via a modulation instability mechanism; wherein said input radiation comprises a substantially circular or elliptical polarization.

In a third aspect of the invention there is provided a broadband radiation source device, being configured for generating broadband output radiation upon receiving substantially linearly polarized input radiation based on a modulation instability mechanism, comprising: a pump radiation source for generating said input radiation with a substantially circular or elliptical polarization; and a hollow-core photonic crystal fiber configured for receiving said input radiation.

Other aspects of the invention comprise metrology device comprising the broadband light source device of the first aspect.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device, which may comprise a radiation source according to embodiments of the invention;
- Figure 5 depicts a schematic overview of a level sensor apparatus which may comprise a radiation source according to embodiments of the invention;
- Figure 6 depicts a schematic overview of an alignment sensor apparatus which may comprise a radiation source according to embodiments of the invention;
- Figure 7 is a schematic cross sectional view of a hollow core optical fiber that may form part of a radiation source according to an embodiment in a transverse plane (i.e. perpendicular to an axis of the optical fiber);
- Figures 8 (a) and (b) schematically depict the transverse cross-sections of examples of hollow core photonic crystal fiber (HC-PCF) designs for supercontinuum generation;
- Figure 9 depicts a schematic representation of a radiation source for providing broadband output radiation;
- Figure 10 depicts a schematic representation of a radiation source with a monitoring branch for aligning the input polarization with a preferred axis of the HC-PCF;
- Figure 11 depicts a schematic representation of a radiation source according to a first embodiment;
- Figure 12 depicts a schematic representation of a radiation source according to a second embodiment; and

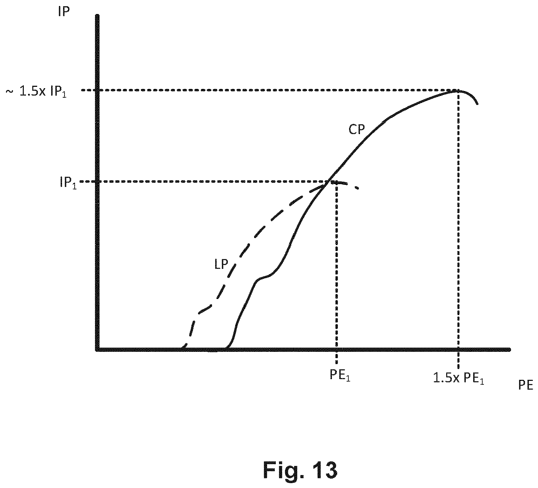

- Figure 13 is a graph of integrated power against pulse energy for linearly polarized light and circularly polarized light.

DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

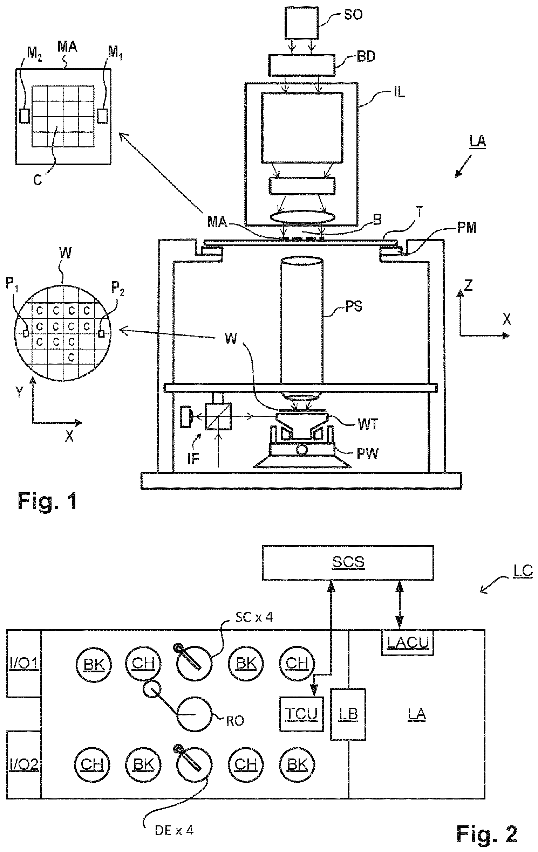

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

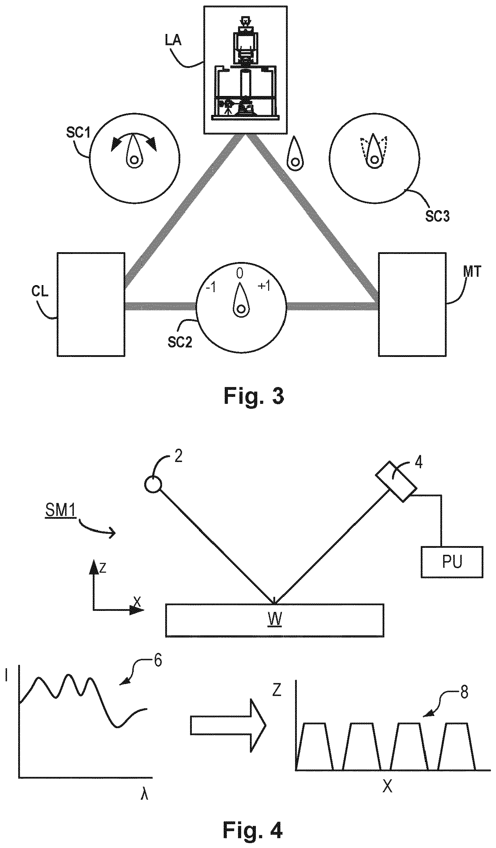

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1 incorporated herein by reference in its entirety.

A metrology apparatus, such as a scatterometer, is depicted in Figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity as a function of wavelength) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863 and published US patent application US 2016/0370717A1 incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

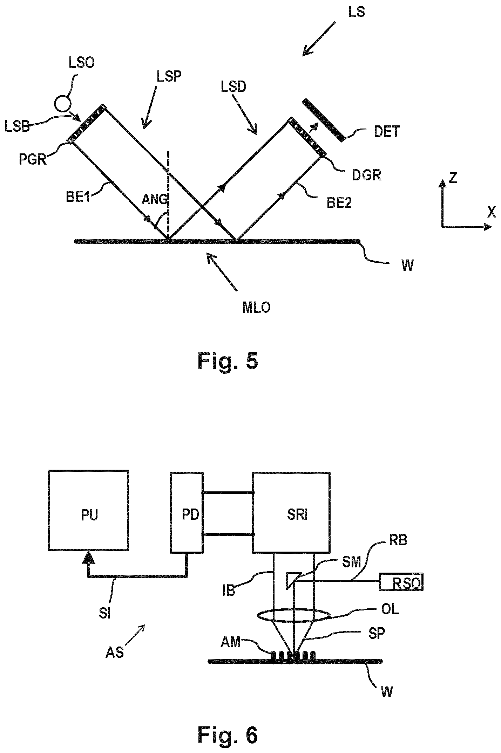

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation or pump radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber (PCF). In several embodiments, such a photonic crystal fiber has microstructures around its fiber core assisting in confining radiation that travels through the fiber in the fiber core. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid material.

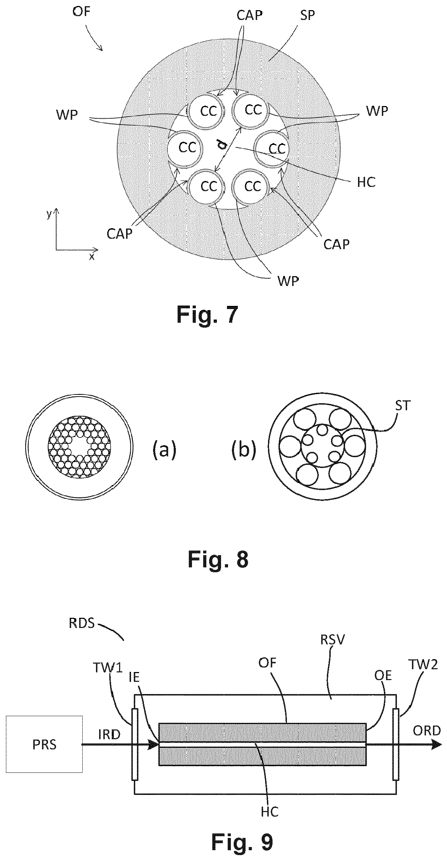

In some implementations, as discussed further below with reference to Figure 9, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

Some embodiments relate to a new design of such a broadband radiation source comprising an optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBFs, for example a Kagome fiber).

A number of types of HC-PCFs can be engineered, each based on a different physical guidance mechanism. Two such HC-PCFs include (purely by way of example): hollow-core photonic bandgap fibers (HC-PBFs) and hollow-core anti-resonant reflecting fibers (HC-ARFs). Detail on the design and manufacture of HC-PCFs can be found in US patent US2004/015085A1 (for HC-PBFs) and International PCT patent application WO2017/032454A1 (for Hollow Core anti-resonant reflecting fibers), which are incorporated herein by reference. Figure 9(a) shows a Kagome fiber, comprising a Kagome lattice structure.

An example of an optical fiber for use in the radiation source is now described with reference to Figure 7, which is a schematic cross sectional view of the optical fiber OF in a transverse plane. Further embodiments similar to the practical example of the fiber of Figure 7 are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 7 shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 cm and 10 m, for example, the optical fiber OF may have a length between 10 cm and 100 cm.

The optical fiber OF comprises: a hollow core HC; a cladding portion surrounding the hollow core HC; and a support portion SP surrounding and supporting the cladding portion. The optical fiber OF may be considered to comprise a body (comprising the cladding portion and the support portion SP) having a hollow core HC. The cladding portion comprises a plurality of anti-resonance elements for guiding radiation through the hollow core HC. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally suppressed. In some embodiments, the capillary wall portion WP may have a thickness between 0.01 - 10.0 $\mu$m.

It will be appreciated that, as used herein, the term cladding portion is intended to mean a portion of the optical fiber OF for guiding radiation propagating through the optical fiber OF (i.e. the capillaries CAP which confine said radiation within the hollow core HC). The radiation may be confined in the form of transverse modes, propagating along the fiber axis.

The support portion is generally tubular and supports the six capillaries CAP of the cladding portion. The six capillaries CAP are distributed evenly around an inner surface if the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core HC. An inner surface of the ring structure of capillaries CAP at least partially defines the hollow core HC of the optical fiber OF. The diameter d of the hollow core HC (which may be defined as the smallest dimension between opposed capillaries, indicated by arrow d) may be between 10 and 1000 μm. The diameter d of the hollow core HC may affect the mode field diameter, impact loss, dispersion, modal plurality, and non-linearity properties of the hollow core HC optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Figure 8(a) shows an embodiment of HC-PCFs with three rings of capillaries CAP stacking on top of each other along the radial direction. In this embodiment, each capillary CAP is in contact with other capillaries both in the same ring and in a different ring. Furthermore, although the embodiment shown in Figure 7 comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 8(b) shows a modified embodiment of the above discussed HC-PCFs with a single ring of tubular capillaries. In the example of Figure 9(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 7 and Figures 8(a) and 8(b) may have a circular cross-sectional shape. Other shapes are also possible for the tubular capillaries, like elliptical or polygonal cross-sections. Additionally, the solid material of the tubular capillaries of the examples of Figure 7, Figure 8(a) and Figure 8(b) may comprise plastic material, like PMA, glass, like silica, or soft glass.

Figure 9 depicts a radiation source RDS for providing broadband output radiation. The radiation source RDS comprises a pulsed pump radiation source PRS or any other type of source that is capable of generating short pulses of a desired length and energy level; an optical fiber OF (for example of the type shown in Figure 7) with a hollow core HC; and a working medium (for example a gas) disposed within the hollow core HC. Although in Figure 9 the radiation source RDS comprises the optical fiber OF shown in Figure 7, in alternative embodiments other types of hollow core HC optical fiber OF may be used.

The pulsed pump radiation source PRS is configured to provide pump radiation or input radiation IRD. The hollow core HC of the optical fiber OF is arranged to receive the input radiation IRD from the pulsed pump radiation source PRS, and broaden it to provide output radiation ORD. The working medium enables the broadening of the frequency range of the received input radiation IRD so as to provide broadband output radiation ORD.

The radiation source RDS further comprises a reservoir RSV. The optical fiber OF is disposed inside the reservoir RSV. The reservoir RSV may also be referred to as a housing, container or gas cell. The reservoir RSV is configured to contain the working medium. The reservoir RSV may comprise one or more features, known in the art, for controlling, regulating, and/or monitoring the composition of the working medium (which may be a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV. In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the apparatus.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium. The second end section may be placed inside a second reservoir, wherein the second reservoir may also comprise a working medium. The functioning of the reservoirs may be as described in relation to Figure 9 above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium (which may be a gas) may be contained within the reservoir RSV. It will be appreciated that the gas may be contained within the reservoir RSV at a pressure different to the ambient pressure of the reservoir RSV.

The working medium may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulational instability (MI), soliton self-compression, soliton fission, Kerr effect, Raman effect and dispersive wave generation (DWG), details of which are described in WO2018/127266A1 and US9160137B1 (both of which are hereby incorporated by reference). Since the dispersion of the filling gas can be tuned by varying the working medium pressure in the reservoir RSR (i.e. gas cell pressure), the generated broadband pulse dynamics and the associated spectral broadening characteristics can be adjusted so as to optimize the frequency conversion

In one implementation, the working medium may be disposed within the hollow core HC at least during receipt of input radiation IRD for producing broadband output radiation ORD. It will be appreciated that, while the optical fiber OF is not receiving input radiation IRD for producing broadband output radiation, the gas may be wholly or partially absent from the hollow core HC.

In order to achieve frequency broadening high intensity radiation may be desirable. An advantage of having a hollow core HC optical fiber OF is that it may achieve high intensity radiation through strong spatial confinement of radiation propagating through the optical fiber OF, achieving high localised radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core HC optical fiber OF may be that the majority of the radiation guided inside the optical fiber OF is confined to the hollow core HC. Therefore, the majority of the interaction of the radiation inside the optical fiber OF is with the working medium, which is provided inside the hollow core HC of the optical fiber OF. As a result, the broadening effects of the working medium on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may comprise a single frequency, or a narrow range of frequencies. The input radiation IRD may be generated by a laser. Similarly, the output radiation ORD may be collimated and/or may be coherent.

The broadband range of the output radiation ORD may be a continuous range, comprising a continuous range of radiation frequencies. The output radiation ORD may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation ORD may comprise for example electromagnetic radiation over a wavelength range of 100 nm - 4000 nm. The broadband output radiation ORD frequency range may be for example 400 nm - 900 nm, 500 nm - 900 nm, or 200 nm - 2000 nm. The supercontinuum output radiation ORD may comprise white light.

The input radiation IRD provided by the pulsed pump radiation source PRS may be pulsed. The input radiation IRD may comprise electromagnetic radiation of one or more frequencies between 200 nm and 2 $\mu$m. The input radiation IRD may for example comprise electromagnetic radiation with a wavelength of 1.03 $\mu$m. The repetition rate of the pulsed radiation IRD may be of an order of magnitude of 1 kHz to 100 MHz. The pulse energies may have an order of magnitude of 0.1 $\mu$J to 100 $\mu$J, for example 1 - 10 $\mu$J. A pulse duration for the input radiation IRD may be between 10 fs and 10 ps, for example 300 fs. The average power of input radiation IRD may be between 100 mW to several 100 W. The average power of input radiation IRD may for example be 20 - 50 W.

The pulsed pump radiation source PRS may be a laser. The spatio-temporal transmission characteristics of such a laser pulse, e.g. its spectral amplitude and phase, transmitted along the optical fiber OF can be varied and tuned through adjustment of (pump) laser parameters, working component variations, and optical fiber OF parameters. Said spatio-temporal transmission characteristics may include one or more of: output power, output mode profile, output temporal profile, width of the output temporal profile (or output pulse width), output spectral profile, and bandwidth of the output spectral profile (or output spectral bandwidth). Said pulsed pump radiation source PRS parameters may include one or more of: pump wavelength, pump pulse energy, pump pulse width, pump pulse repetition rate. Said optical fiber OF parameters may include one or more of: optical fiber length, size and shape of the hollow core HC, size and shape of the capillaries, thickness of the walls of the capillaries surrounding the hollow core HC. Said working component, e.g. filling gas, parameters may include one or more of: gas type, gas pressure and gas temperature.

The broadband output radiation ORD provided by the radiation source RDS may have an average output power of at least 1 W. The average output power may be at least 5 W. The average output power may be at least 10 W. The broadband output radiation ORD may be pulsed broadband output radiation ORD. The broadband output radiation ORD may have a power spectral density in the entire wavelength band of the output radiation of at least 0.01 mW/nm. The power spectral density in the entire wavelength band of the broadband output radiation may be at least 3 mW/nm.

In many applications that require broadband output radiation ORD, such as the aforementioned metrology applications, there is a growing interest in further extending the short wavelength edge of the broadband output radiation ORD, in particular extending into the ultraviolet (UV) wavelength region. The desired wavelength region may comprise wavelengths down to 400 nm , down to 350 nm, down to 300 nm, down to 200 nm, down to 100 nm, down to 50 nm or down to 10 nm for example. Radiation sources RDS that are capable of emitting broadband output radiation ORD (e.g., supercontinuum or white light) with a smooth (or flat) spectral profile and an extended short wavelength edge are highly desirable in applications where better wavelength versatility and thus greater flexibility are sought after. For example, a smooth and UV-extended supercontinuum is particularly useful in overlay metrology applications where existing light sources are unable to meet the ongoing demand of using targets with smaller pitch sizes and higher numbers of layers. Extended UV wavelengths are capable of resolving smaller target gratings and penetrating more target layers. A smooth and UV-extended spectral profile also enables accurate and reliable wavelength switching between different spectral ranges for different applications or for optimizing measurement performance.

At present, several methods have been adopted to further extend the short wavelength edge of broadband output radiation ORD generated in an optical fiber OF. These methods include a) using a longer optical fiber OF; b) using an optical fiber with a smaller core diameter; and c) using a lower gas pressure. When used separately or in combination, such methods facilitate generation of UV wavelengths by allowing phasing matching conditions to be fulfilled in the UV region. However, such methods have many disadvantages. For example, a longer hollow core HC optical fiber OF (e.g., a HC-PCF) typically requires a larger reservoir RSV which leads to larger physical dimensions of a broadband radiation source RDS and higher manufacturing costs. A radiation source with a large footprint makes it unsuitable for many applications where only limited space is provided to accommodate the radiation source. Decreasing the core diameter of a hollow core HC optical fiber OF increases the propagation loss in the fiber, resulting in lower conversion efficiencies and undesired (e.g., imbalanced or peaky) spectral profiles. In addition, fabrication of hollow core HC optical fibers OF with smaller core diameters in a drawing tower is very challenging, thereby resulting in higher manufacturing costs. Reducing the gas pressure significantly reduces the nonlinearity in the gas-filled hollow core HC, also resulting in lower conversion efficiencies and undesired (e.g., imbalanced or peaky) spectral profiles. To maintain the same level of nonlinearity in a lower gas pressure, a pulsed pump radiation source PRS with higher pulse energies will be required. However, such high pulse energy pump radiation sources PRS can be very expensive.

There are many nonlinear optical processes involved in generation of broadband output radiation ORD (e.g., supercontinuum or white light). Which nonlinear optical process has a more pronounced spectral broadening effect over the others will depend on how the operating parameters are set. For example, by selecting a pump wavelength and/or an optical fiber such that the pump pulse propagates through the fiber in a normal dispersion region (positive group velocity dispersion (GVD)), self-phase modulation is the dominant nonlinear optical process and is responsible for spectral expansion of the pump pulse. However in most cases, spectral broadening of input radiation IRD provided by the pulsed pump radiation source PRS is driven by soliton dynamics which require a pump pulse to propagate in an optical fiber OF in the anomalous dispersion region (negative GVD). This is because, in the anomalous dispersion region, the effects of Kerr nonlinearity and dispersion act in opposition to each other. When the pulse parameters of a pump pulse, which is launched into an optical fiber (e.g., HC-PCF) with anomalous chromatic dispersion, do not exactly match those of a soliton, the pump pulse will evolve into a soliton pulse with a certain soliton order and a dispersive wave.

It is known that soliton fission and modulation instability (MI) are the two primary mechanisms for spectral broadening in soliton driven broadband radiation generation. The distinction between the two mechanisms is that the soliton fission process is associated with low soliton orders whereas the MI process is associated with high soliton orders. MI is a physical process which refers to the spontaneous growth of spectral sidebands of a strong narrow-band (compared to the MI modulation frequency) pump pulse in a nonlinear dispersive medium. MI generally arises in the anomalous dispersion regime; however, it can also arise in the normal dispersion region if certain requirements are fulfilled, for example, high order dispersion is present. During the MI process, tiny perturbations present in the electric field (or envelope) of the pulse, e.g., due to quantum fluctuations, are amplified exponentially in the presence of Kerr nonlinearity.

The amount of amplification is determined by the MI gain. During such a MI process, the temporal pulse envelope breaks into a plurality of short temporal sub-structures or fundamental solitons. In parallel to this, spectral side bands are created symmetrically at both sides of the peak pump wavelength resulting in a continuously broadening spectral profile.

The modulation frequency is expressed as:

$$\Delta\omega_{MI} = \sqrt{\frac{2\gamma P}{|\beta_2|}} \qquad\qquad \text{Eq. [1]}$$

and the corresponding MI period is given by:

$$T_{MI} = {2\pi}/{\Delta\omega_{MI}} = {2\pi}\Big/{\sqrt{\frac{2\gamma P}{|\beta_2|}}} \qquad\qquad \text{Eq. [2]}$$

where $\gamma$ denotes nonlinear coefficient, $P$ denotes pump power, and $\beta_2$ denotes fiber propagation constant. For the MI process to dominate, the pump pulse should be sufficiently longer than the MI period $T_{MI}$. However, it is not possible to tell from the pump pulse duration alone whether the soliton fission process or the MI process will be the dominant mechanism for spectral expansion in broadband radiation generation. This is because the pump pulse duration scales with the pump peak power which affects the nonlinear coefficient and thus the modulation period.

For a given pump pulse with a pulse duration $\tau$, the equivalent soliton order N is given by:

$$N = {\sqrt{2}\pi\tau_0}/{T_{MI}} . \qquad\qquad \text{Eq. [3]}$$

In Eq. [1], for $N = 1$, the soliton is the fundamental soliton. All other solitons with N > 1, are high order solitons. As described above, for the MI process to be the dominant spectral broadening mechanism, the pump pulse needs to be sufficiently longer than the MI period $T_{MI}$ (or $\tau_0 \gg T_{MI}$). It has been found that spectral broadening is typically dominated by the MI process when $N \gg 20$ whereas spectral broadening is typically dominated by soliton fission when $N \ll 20$. Therefore, for arrangements which use the MI process, it is desirable to produce input radiation IRD with a high soliton order N. Furthermore, as can be seen from Eq. [3], the soliton order of the input radiation IRD is proportional to the pulse duration $\tau_0$ of the input radiation IRD. Therefore, for typical prior art arrangements where the MI process dominates, the pulse duration $\tau_0$ of the input radiation IRD typically ranges from 100 femtoseconds (fs) to 10s of picoseconds (ps), and the pulse energy ranges from 1 microjoules ($\mu$J) to 20 $\mu$J.

Other nonlinear optical processes such as for example Raman processes can also contribute to the nonlinear spectral expansion. Raman processes have a dependence on the type of the gas medium. For example, in the case where the broadband output radiation ORD is generated in a HC-ARF filled with a noble gas or gas mixture (e.g., Argon, Krypton, and Xenon), MI is the dominant process for spectral broadening of a pump pulse while the Raman effect is absent. Similarly, in the case where the broadband output radiation ORD is generated in a HC-ARF filled with a Raman active gas or gas mixture (e.g., Hydrogen, Deuterium and Nitrogen), MI is still the dominant process if the pump pulse duration is on the order of or shorter than the oscillation time of the dominant (i.e. higher gain) molecular oscillations, while the Raman effect is less dominant and results in a red-shift of the pump pulse spectral centroid. However, the Raman effect plays a dominant role when the pump pulse duration is longer than the oscillation time of the dominant Raman active modes. The Raman effect induces soliton self-frequency shift and soliton collisions. It has been found that the interplay between the Raman processes and the MI process can result in an extended long wavelength edge of the broadband output radiation ORD.

In optical metrology, the performance of a metrology tool often depends *inter alia* on the polarization stability of the source radiation (e.g., the broadband light from the source). Variations in the received polarization state typically results in variation in the power at wafer level, impairing the fidelity of the metrology system.

To conversion efficiency from input radiation IRD to broadband output radiation ORD in the HC-PCF, the input polarization should be aligned with the preferred axis of the hollow fiber. The preferred axis will be one of the fast axis or slow axis; only one of these two axes provides optimum conversion efficiency and maintains a linear polarization state of the input radiation IRD. In an industrialized product, this is cumbersome to achieve because the preferred axis of the HC-PCF is not known prior to mounting, nor is it always apparent which of the fast axis or slow axis will be the preferred axis. This means that when a gas cell is swapped, the input polarization angle needs to be scanned to maximize a polarization metric such as the polarization extinction ratio (PER) and obtain a suitable output power spectral density (PSD). This requires additional components to monitor and vary the PER: which increases costs, volume and light source downtime (scanning is slow). While a mitigation strategy may comprise factory-alignment of the absolute HC-PCF rotation, the polarization performance during the envisioned lifetime cannot be secured without such additional components.

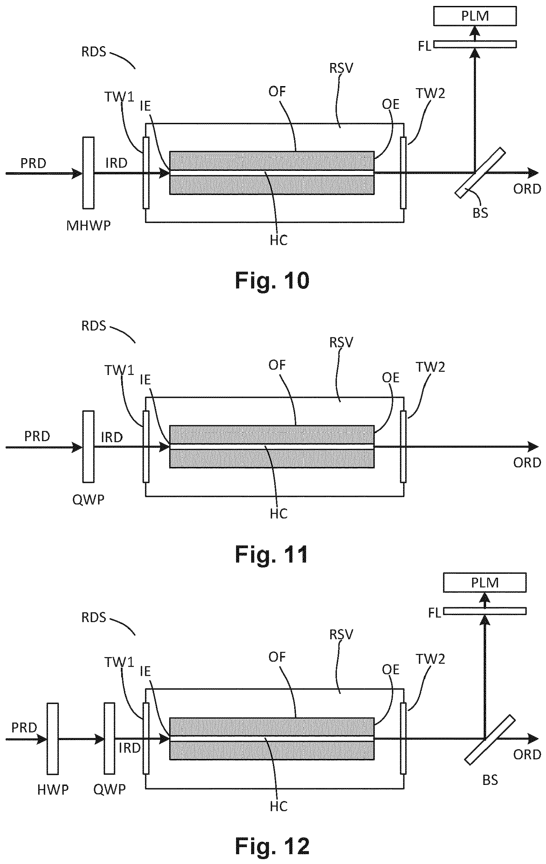

Figure 10 is a schematic illustration of a HC-PCF source arrangement comprising additional components for aligning the input polarization with the preferred (e.g. slow or fast) axis of the HC-PCF, such that the PER and polarization axis of the spectrally filtered white light output can be assessed. The components already described in relation to Figure 9 will not be described again. A variable half-waveplate MHWP is provided before the optical fiber HC. A filter FT and polarimeter PLM is provided for measuring the PER of the output radiation ORD (i.e., of a portion of the main output beam, or monitoring branch, split off by beam splitter BS) as function of the input polarization orientation. The variable half-waveplate MHWP can be used to rotate the axis of the linearly polarized pump light PRD to obtain axis-rotated input radiation IRD while the PER of the output radiation is monitored, till the PER is maximized.

The inventors have also observed that PER strongly varies from fiber-to-fiber (taken from one drawing run) or between fiber production batches: PER ranges between 5-20 dB have been measured. This relatively large PER range requires dynamic (i.e., fiber-depending) polarization-management downstream of the HC-PCF, which increases product complexity and costs.

It is proposed to provide a HC-PCF based radiation source configured to generate broadband radiation via the MI process (e.g., using a working medium comprising an MI gas or gas mixture such as one or more noble/Group 18 gasses) using circularly or elliptically polarized input radiation or pump radiation.

Figure 11 is a schematic illustration of a first source arrangement according to an embodiment. The arrangement replaces the variable half-wave plate of Figure 10 with a first polarization element or (e.g., fixed) quarter-wave plate QWP which imposes a circular polarization on the linearly polarized pump radiation PRD to obtain circularly polarized input radiation IRD. In this example, as the quarter-wave plate QWP is fixed, there is no monitoring branch at the output including a polarimeter. In other embodiments, the quarter-wave plate QWP may be variable and a monitoring branch included.

An advantage of using a fixed quarter-wave plate QWP is that the polarization orientation of the input radiation IRD after passing the QWP is known and therefore factory-alignment of the quarter-wave plate QWP with respect to the linear polarized input radiation IRD is straightforward. This means that no in-product polarimeter and a variable stage is required, simplifying the arrangement. In addition, reproducibility is ensured because each new HC-PCF sees a circular polarization at its input.

Another aspect which may be improved with the concepts disclosed herein is output PSD. It may seem intuitively that output PSD can be increased by simply scaling pump energy and/or repetition rate. This is true to a point; however, in practice, this approach has limitations. At low (up to e.g., 1-2.5 MHz) repetition rates, the PSD is essentially linearly proportional with repetition rate. However, when driving a hollow core fiber at higher pulse energies, the PSD exhibits a roll-off. In addition, the roll-off energy shifts to lower energies as the repetition rate is increased beyond a threshold rate (e.g., 2.5 MHz). The effect is likely caused by inter-pulse effects effectively setting an upper limit of the maximum achievable PSD. These inter-pulse effects are likely caused by unwanted ionization of the working gas mixture by the input radiation (it is possible to go to much higher pulse energies before damaging the solid core when driving a solid core PCF).

However, when driving the spectral broadening using circularly or elliptically polarized input radiation, the nonlinear refractive index of the working gas mixture is 1.5 times smaller than for linearly-polarized input radiation. In addition, using circularly or elliptically polarized input radiation reduces ionization of the working gas mixture. As a consequence, a 50 % larger pump energy is required to enable the same optical nonlinearity, which results in a beneficial scaling of the output PSD. As such, while the spectrum generated by circular polarized input radiation shows similar roll-off behavior as for linear polarized radiation, the roll-off materializes at a higher pump energy compared to the linear polarized case. This is illustrated in the graph of integrated power IP (or PSD) against pulse energy PE for linearly polarized light LP and circularly polarized light CP. The inventors have experimentally proven that the PSD can be increased by a factor of 1.5 if pumped with circularly polarized pump radiation at a 50% higher energy level.

It should be appreciated that this linear scaling (prior to roll-off) of the nonlinear refractive index (and hence the PSD), comes without significant change to spectrum characteristics (e.g., spectrum shape) is a feature of MI generation. Increasing the input energy and/or repetition rate when using Raman generation will result in changes to the spectrum shape, which is undesirable.

In another embodiment of the invention a defined elliptical polarization state (rather than a substantially circular polarization state) may be defined for the input radiation IRD to pre-compensate for fiber birefringence and therefore achieve better linear output polarization fidelity.

Figure 12 illustrates an embodiment for obtaining such an elliptical polarization state. The arrangement comprises a second polarization element or variable (e.g., motorized) half-wave plate HWP in addition to a fixed or variable quarter wave plate QWP (first polarization element). The arrangement also comprises a monitoring branch with polarimeter PLM to monitor the output PER. This embodiment improves the PER reproducibility of the output polarization for different fibers. In an embodiment, the orientation of the half wave plate HWP and (optionally, if variable) the quarter wave plate with respect to the polarization-orientation of the input radiation is/are adjusted such that the output of the HC-PCF is predominantly linearly polarized (e.g., maximized PER and/or a degree of circular polarization of less than 1%). This may be performed by scanning each of the half wave plate HWP and quarter wave plate over a suitable range (e.g., 45 degrees) to obtain a 2D map from which maximized PER can be determined.

In the above disclosure, any elliptical polarization state may describe a polarization state of the input radiation having a degree of circular polarization (DCOP) with a magnitude greater than 10%, a magnitude greater than 20%, magnitude greater than 30%, magnitude greater than 40%, a magnitude greater than 50%, a magnitude greater than 60%, a magnitude greater than 70%, a magnitude greater than 80%, or a magnitude greater than 90%.

DOCP expresses the fraction or percentage of circular polarized light in a beam. For example, a DCOP of zero corresponds to a state which can be a combination of linear and unpolarized light, although the (pump laser) input radiation will have a high degree of (linear) polarization so effectively a DCOP will signify linearly polarized light in this application. A circular polarization state may describe a polarization state of the input radiation having a DCOP with a magnitude of substantially 100% (e.g., greater than 99% or greater than 99.9%). The DCOP may describe a scale from -100% (or -1) to 100% (or 1), where -100% DCOP describes purely left-handed circularly polarized radiation and 100% DCOP describes purely right-handed circularly polarized radiation and values therebetween may describe the degree of ellipticity of the polarization.

The degree of ellipticity of the polarization may also be described in terms of the aspect ratio of the ellipticity. For example, circularly polarized radiation may have an aspect ratio of 1, and the elliptically polarized input radiation may have an ellipticity described by an aspect ratio smaller than 20:1, smaller 10:1, smaller 8:1, smaller 6:1, smaller than 4:1 or smaller than 2:1.

In another embodiment, instead of generating the elliptically or circularly polarized radiation by imposing elliptical or circular polarization on linearly polarized pump radiation using one or more polarization elements, the pump radiation source may be configured to directly generate the elliptically or circularly polarized radiation, e.g., due to characteristics of its cavity.

Further embodiments of the invention are disclosed in the list of numbered clauses below:

1. A broadband radiation source device, being configured for generating broadband output radiation upon receiving substantially linearly polarized input radiation based on a modulation instability mechanism, comprising: a hollow-core photonic crystal fiber; and at least a first polarization element operable to impose a substantially circular or elliptical polarization on said input radiation prior to being received by said hollow-core photonic crystal fiber.

2. A broadband radiation source device according to clause 1, wherein said at least a first polarization element is operable to increase the degree of circular polarization on said input radiation by a magnitude greater than 10%.

3. A broadband radiation source device according to clause 1 or 2, wherein said first polarization element comprises a quarter wave plate operable to impose a substantially circular polarization on said input radiation.

4. A broadband radiation source device according to clause 1, 2 or 3, wherein said first polarization element comprises a fixed orientation with respect to a linear polarization state of said input radiation.

5. A broadband radiation source device according to clause 1, 2 or 3, wherein said first polarization element comprises a variable first polarization element having a variable orientation with respect to a linear polarization state of said input radiation.

6. A broadband radiation source device according to any preceding clause, comprising a second polarization element operable in combination with said first polarization element to impose a substantially elliptical polarization on said input radiation.

7. A broadband radiation source device according to clause 6 wherein said second polarization element comprises a half wave plate.

8. A broadband radiation source device according to clause 6 or 7, wherein said second polarization element and said first polarization element are oriented such that said elliptical polarization compensates for fiber birefringence of said hollow-core photonic crystal fiber.

9. A broadband radiation source device according to clause 6, 7 or 8, comprising a polarimeter operable to monitor a polarization metric of said broadband output radiation.

10. A broadband radiation source device according to any preceding clause, wherein said hollow-core photonic crystal fiber comprises a working mixture operable to generating said broadband output radiation via a modulation instability mechanism.

11. A broadband radiation source device according to clause 10, wherein said hollow-core photonic crystal fiber comprises one or more noble gases as a working mixture.

12. A broadband radiation source device according to any preceding clause, comprising a pump radiation source for generating said input radiation.

13. A method of generating broadband output radiation, the method comprising:

exciting a working medium comprised within a hollow-core photonic crystal fiber with input radiation to generate said broadband output radiation via a modulation instability mechanism; wherein said input radiation comprises a substantially circular or elliptical polarization.

14. A method according to clause 13, wherein said input radiation has a degree of circular polarization greater than 10%.

15. A method according to clause 13 or 14, comprising imposing a substantially circular polarization on said input radiation using a quarter wave plate.

16. A method according to clause 13 or 14, comprising imposing a substantially elliptical polarization on said input radiation using a quarter wave plate in combination with a half wave plate.

17. A method according to clause 16, wherein said elliptical polarization compensates for fiber birefringence of said hollow-core photonic crystal fiber.

18. A method according to clause 16 or 17, comprising varying the orientation of at least the half wave plate with respect to a polarization-orientation of the input radiation such that the broadband output radiation is predominantly linearly polarized.

19. A method according to clause 16 or 17, comprising varying the orientation of each of the half wave plate and the quarter wave plate with respect to a polarization-orientation of the input radiation such that the broadband output radiation is predominantly linearly polarized.

20. A method according to any of clauses 13 to 19, wherein said working mixture comprises one or more noble gases.

21. A metrology device comprising a broadband radiation source device according to any of clauses 1 to 11.

22. A metrology device according to clause 21, comprising a scatterometer metrology apparatus, a level sensor or an alignment sensor.

23. A broadband radiation source device, being configured for generating broadband output radiation upon receiving substantially linearly polarized input radiation based on a modulation instability mechanism, comprising: a pump radiation source for generating said input radiation with a substantially circular or elliptical polarization; and a hollow-core photonic crystal fiber configured for receiving said input radiation.

24. A broadband radiation source device according to clause 23, comprising a polarimeter operable to monitor a polarization metric of said broadband output radiation.

25. A broadband radiation source device according to clause 23 or 24, wherein said hollow-core photonic crystal fiber comprises a working mixture operable to generating said broadband output radiation via a modulation instability mechanism.

26. A broadband radiation source device according to clause 25, wherein said hollow-core photonic crystal fiber comprises one or more noble gases as a working mixture.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. A broadband radiation source device, being configured for generating broadband output radiation upon receiving substantially linearly polarized input radiation based on a modulation instability mechanism, comprising:

a hollow-core photonic crystal fiber; and

at least a first polarization element operable to impose a substantially circular or elliptical polarization on said input radiation prior to being received by said hollow-core photonic crystal fiber.

2. A broadband radiation source device as claimed in claim 1, wherein said at least a first polarization element is operable to increase the degree of circular polarization on said input radiation by a magnitude greater than 10%.

3. A broadband radiation source device as claimed in claim 1 or 2, wherein said first polarization element comprises a quarter wave plate operable to impose a substantially circular polarization on said input radiation.

4. A broadband radiation source device as claimed in any preceding claim, comprising a second polarization element operable in combination with said first polarization element to impose a substantially elliptical polarization on said input radiation.

5. A broadband radiation source device as claimed in claim 4, wherein said second polarization element comprises a half wave plate.

6. A broadband radiation source device as claimed in claim 4 or 5, wherein said second polarization element and said first polarization element are oriented such that said elliptical polarization compensates for fiber birefringence of said hollow-core photonic crystal fiber.

7. A broadband radiation source device as claimed in any preceding claim, wherein said hollow-core photonic crystal fiber comprises a working mixture operable to generate said broadband output radiation via a modulation instability mechanism.

8. A broadband radiation source device as claimed in claim 7, wherein said hollow-core photonic crystal fiber comprises one or more noble gases as a working mixture.

9. A method of generating broadband output radiation, the method comprising:

exciting a working medium comprised within a hollow-core photonic crystal fiber with input radiation to generate said broadband output radiation via a modulation instability mechanism,
wherein said input radiation is substantially circularly or elliptically polarized.

10. A method as claimed in claim 9, wherein said input radiation has a degree of circular polarization greater than 10%.

11. A method as claimed in claim 9 or 10, comprising imposing a substantially circular polarization on said input radiation using a quarter wave plate.

12. A method as claimed in claim 9, comprising imposing a substantially elliptical polarization on said input radiation using a quarter wave plate in combination with a half wave plate.

13. A method as claimed in claim 12, wherein said elliptical polarization compensates for fiber birefringence of said hollow-core photonic crystal fiber.

14. A broadband radiation source device, being configured for generating broadband output radiation upon receiving substantially linearly polarized input radiation based on a modulation instability mechanism, the broadband radiation source device comprising:

a pump radiation source for generating said input radiation with a substantially circular or elliptical polarization; and
a hollow-core photonic crystal fiber configured for receiving said input radiation.

15. A broadband radiation source device as claimed in claim 14, wherein said hollow-core photonic crystal fiber comprises a working mixture operable to generate said broadband output radiation via a modulation instability mechanism, wherein said hollow-core photonic crystal fiber comprises one or more noble gases as a working mixture.

**Fig. 1**

**Fig. 2**

LA

SC1

SC3

CL

MT

-1   0   +1

SC2

**Fig. 3**

2

4

SM1

Z

X

PU

W

6

I

λ

Z

8

X

**Fig. 4**

**Fig. 5**

**Fig. 6**

**Fig. 7**

(a)    (b)

**Fig. 8**

**Fig. 9**

RDS

TW1 IE
OF RSV
PLM
FL
OE TW2

PRD IRD ORD
MHWP BS
HC

**Fig. 10**

RDS

TW1 IE
OF RSV
OE TW2

PRD IRD ORD
QWP
HC

**Fig. 11**

PLM
FL

RDS
OF RSV
TW1 IE OE TW2

PRD IRD ORD
HWP QWP BS
HC

**Fig. 12**

Fig. 13

Europäisches
Patentamt

European
Patent Office

Office européen
des brevets

# EUROPEAN SEARCH REPORT

Application Number

EP 21 20 5875

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAOWEI CHEN ET AL: "Generation of 4.3 fs. 1 mJ laser pulses via compresssion of circularly polarized pulses in a gas-filled hollow-core fiber", OPTICS LETTERS, OPTICAL SOCIETY OF AMERICA, US, vol. 34, no. 10, 15 May 2009 (2009-05-15), pages 1588-1590, XP001523941, ISSN: 0146-9592 | 1-5, 9-12,14 | INV.<br>G02F1/35<br>G02F1/365 |
| Y | * figure 1 * | 7,8,15 | |
| A | | 6,13 | |
|   | ----- | | |
| X | DAVTYAN S ET AL: "Polarization-Tailored Raman Frequency Conversion in Chiral Gas-Filled Hollow Core Photonic Crystal Fibers", ARXIV.ORG, CORNELL UNIVERSITY LIBRARY, 201 OLIN LIBRARY CORNELL UNIVERSITY ITHACA, NY 14853, 15 April 2019 (2019-04-15), XP081169255, DOI: 10.1103/PHYSREVLETT.122.143902 | 1-5, 9-12,14 | |
| Y | * figure 2a * | 7,8,15 | TECHNICAL FIELDS SEARCHED (IPC) |
| A | | 6,13 | G02F<br>G02B |
|   | ----- | | |
| Y | EP 3 715 945 A1 (ASML NETHERLANDS BV [NL]) 30 September 2020 (2020-09-30) * claim 4 * | 7,8,15 | |
|   | ----- | | |
| A | CN 107 462 948 A (UNIV NORTHEASTERN) 12 December 2017 (2017-12-12) * abstract * | 1-15 | |
|   | ----- | | |
| A | CN 110 595 515 A (UNIV HUAZHONG SCIENCE TECH) 20 December 2019 (2019-12-20) * abstract * | 1-15 | |
|   | ----- | | |

The present search report has been drawn up for all claims

| Place of search | Date of completion of the search | Examiner |
|---|---|---|
| The Hague | 7 April 2022 | Gill, Richard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 20 5875

07-04-2022

| Patent document cited in search report | | Publication date | Patent family member(s) | | Publication date |
|---|---|---|---|---|---|
| EP 3715945 | A1 | 30-09-2020 | CN | 113631999 A | 09-11-2021 |
| | | | EP | 3715945 A1 | 30-09-2020 |
| | | | KR | 20210129141 A | 27-10-2021 |
| | | | SG | 11202109821U A | 28-10-2021 |
| | | | TW | 202102886 A | 16-01-2021 |
| | | | US | 2020310251 A1 | 01-10-2020 |
| | | | WO | 2020193075 A1 | 01-10-2020 |
| CN 107462948 | A | 12-12-2017 | NONE | | |
| CN 110595515 | A | 20-12-2019 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6952253 B
- US 20100328655 A
- US 2011102753 A1
- US 20120044470A A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B
- US 13891410 B
- WO 2011012624 A
- US 20160161863 A
- US 20160370717 A1
- US 7265364 B
- US 7646471 B
- US 2010233600 A1
- WO 2016102127 A1
- US 6961116 B
- US 2015261097 A1
- US 2004015085 A1
- WO 2017032454 A1
- WO 2018127266 A1
- US 9160137 B1